(19) **Europäisches Patentamt / European Patent Office / Office européen des brevets**

(11) **EP 1 574 549 B1**

(12) **EUROPEAN PATENT SPECIFICATION**

(45) Date of publication and mention of the grant of the patent:
**03.01.2007 Bulletin 2007/01**

(51) Int Cl.:
***C08L 23/08*** *(2006.01)*

(21) Application number: **04445026.0**

(22) Date of filing: **12.03.2004**

(54) **LLDPE pressure pipe**

LLDPE Druckrohr

Tuyau sous pression en LLDPE

(84) Designated Contracting States:
**AT BE BG CH CY CZ DE DK EE ES FI FR GB GR HU IE IT LI LU MC NL PL PT RO SE SI SK TR**

(43) Date of publication of application:
**14.09.2005 Bulletin 2005/37**

(73) Proprietor: **Borealis Technology Oy**
**06101 Porvoo (FI)**

(72) Inventors:
• **Johansson, Solveig**
**444 47 Stenungsund (SE)**

• **Olsson, Sune**
**444 95 Ödsmaal (SE)**
• **Larsson, Haakan**
**444-60 Stora Höga (SE)**
• **Vahteri, Markhu**
**06100 Porvoo (FI)**

(74) Representative: **Stenbäck, Maria Elisabeth**
**Awapatent AB,**
**P.O. Box 5117**
**200 71 Malmö (SE)**

(56) References cited:
**EP-A- 1 267 189**   **US-A- 5 326 835**

## EP 1 574 549 B1

**Description**

Technical field of the invention

The present invention relates to a multimodal linear low density polyethylene composition for the preparation of a pressure pipe.

The invention further relates to a pressure pipe, comprising said composition, a process for the manufacturing of a pipe made of the composition and to a process for the recycling of pipe material consisting of the composition according to the invention. Furthermore, the invention relates to the use of the pressure pipe as an irrigation pipe, especially a drip irrigation pipe.

Background of the invention

Irrigation pipes are often used under severe conditions and consequently the resistance to environmental stress cracking is of utmost importance. Mechanical strength is needed during installation and for durability. Solar heat and light add to environmental stress, e. g. the temperature may be as high as 60°C. Another source of environmental stress is irrigation water containing fertilizers and pesticides. These chemicals are modified to be as little water soluble as possible, since they should stick to plants and soil and not be washed away. Accordingly, there is a risk that these chemicals will migrate into the irrigation pipes. Usually, this will cause failure since a "swollen" polymer has less mechanical strength.

A special type of irrigation pipes are for the purpose of drip irrigation. Such pipes are normally very thin walled and are not self supporting, e. g. more like a gardening pipe. Usually, the diameter is less than 32 mm. As an example may be mentioned a welded film where water drips thorough a special weld, said weld being provided with holes and shapeded like a labyrinth. Another type of drip irrigation pipe is a hose which is cut having a small piece of water penetrable film welded therein, or a special device that allows water to penetrate out from the pipes. In yet another example, a special pocket is welded into the hose. Water may then migrate through labyrinths in this pocket and out through a small hole in the pocket.

Common for all embodiments of irrigation pipes is a good welding factor, that the pipes are not self supporting and very thin walled. The irrigation pipes are conventionally used in agriculture. They may be ploughed into the ground or just rolled out and slowly pulled back when water is irrigated through them. This could be repeated on a daily basis. Moreover, the installation of such irrigation pipes are usually temporary and they must withstand to be driven over by tractors and similar machinery. This means that extremely good abrasion properties are a requirement since the pipes e. g. are pulled over the ground.

Another special requirement is good impact resistance. Especially, when the pipes are installed across a stony ground, a good notch resistance is a requirement.

Furthermore, in connection with irrigation pipes, a well known problem is that fertilizers, which are used in irrigation pipes cause reduction environmental stress cracking resistance (ESCR). Another nomenclature for ESCR, especially in use in pipe applications, is slow crack growth (SCG) resistance.

Low density polyethylene (LDPE) is, due to its low price, still an often employed material in drip irrigation pipes. However, it is known that LDPE suffers from poor environmental stress cracking resistance.

An improvement of the ESCR properties and strength of LDPE have been achieved in unimodal LLDPE. Presently, pressure pipes for the purpose of irrigation are manufactured from, e. g. unimodal linear low density polyethylene (LLDPE), unimodal medium density polyethylene (MDPE), unimodal high density polyethylene (HDPE) and low density polyethylene (LDPE).

In the application of pressure pipes as irrigation pipes it is advantageous to have low weight and flexible pipes. However, unimodal high density polymers have good mechanical properties and a high E-modulus, but accordingly a low flexibility. Unimodal linear low density polymers are flexible due to the low E-modulus but have poor mechanical properties. Therefore, up to now, it has not been possible to combine the properties of low weight and good flexibility in the production of pressure pipes.

Summary of the invention

The object of the present invention is to provide an improved multimodal linear low density polyethylene composition for the preparation of a pressure pipe, e. g. an irrigation pipe, especially a drip irrigation pipe.

Thus, it is an object of the present invention to provide a multimodal linear low density polyethylene composition having superior mechanical properties, such as slow crack growth (SCG) and rapid crack propagation (RCP), which may be prepared on a large scale on currently available equipment.

According to the invention this object has been achieved by a multimodal linear low density polyethylene composition, characterized in that said composition is prepared in situ and has a density (ISO 1183) of 910-940 kg/m$^3$, an E-modulus (ISO 527) in the range of <800 MPa, an abrasion resistance (ASTM D 4060) of <20 and an MFR$_2$ (ISO 1133) at 190°C/2 kg of <2 g/10 min.

Another object of the present invention is to provide a pipe for irrigation purposes.

According to the invention this object has been achieved by a pressure pipe produced from multimodal linear low density polyethylene composition according to any of claims 1-13.

Yet another object of the invention is to provide a process for the manufacturing of a pressure pipe made of a composition according to any of claims 1-13. This object has been achieved by a process, wherein a film is blown from said composition and subsequently welded to form a pipe.

Furthermore, the invention provides a use of a pressure pipe as an irrigation pipe, especially a drip irrigation pipe.

By the invention a polyethylene composition especially well suited for irrigation purposes may be produced. Compared to unimodal polyethylene compositions the composition of the invention has the benefits of a longer life time, higher pressure resistance, better abrasion resistance, better slow crack growth properties, better RCP (demonstrated as high values of Charpy impact at low temperature), a higher E-modulus, and more flexibility.

By the invention it has surprisingly been found that a bimodal LLDPE material, in addition to the other properties required, i. e. impact strength, pressure class, also has improved slow crack growth (evaluated with CTL and pipe notch test) resistance and superior abrasion resistance rendering it especially suitable for irrigation pipes. Because of the increased mechanical strength of the composition, pipes with thinner walls, such as drip irrigation pipes, may be produced. Consequently, this also results in the pipes being more flexible.

Other distinguishing features and advantages of the invention will appear from the following specification and the appended claims.

Detailed description of preferred embodiments

"Modality" of a polymer refers to the form of its molecular weight distribution curve, i. e. the appearance of the graph of the polymer weight fraction as function of its molecular weight. If the polymer is produced in a several reactor process, utilizing reactors coupled in series and/or with reflux using different conditions in each reactor, the different fractions produced in the different reactors will each have their own molecular weight distribution. When the molecular weight distribution curves from these fractions are superimposed into the molecular weight distribution curve for the total resulting polymer product, that curve will show two or more maxima or at least be distinctly broadened in comparison with the curves for the individual fractions. Such a polymer product, produced in two or more reaction zones, is called bimodal or multimodal.depending on the number of zones.

In the context of the present invention all polymers thus produced in two or more reactors are called "multimodal". It is to be noted here that also the chemical compositions of the different fractions may be different. Thus one or more fractions may consist of an ethylene copolymer, while one or more others may consist of ethylene homopolymer.

By properly selecting the different polymer fractions and the proportions thereof in the multimodal polyethylene a pipe with good mechanical properties together with good processability, good slow crack growth resistance, and a high design stress rating is obtainable.

The irrigation pipe composition of the present invention is a multimodal polyethylene, preferably a bimodal polyethylene. The multimodal polyethylene comprises a low molecular weight (LMW) ethylene homopolymer or copolymer fraction and a high molecular weight (HMW) ethylene copolymer fraction. Depending on whether the multimodal polyethylene is bimodal or has a higher modality the LMW and HMW fractions may comprise only one fraction each or include subfractions, i. e. the LMW may comprise two or more LMW sub-fractions and similarly the HMW fraction may comprise two or more HMW sub-fractions. It is a characterising feature of the present invention that the LMW fraction is an ethylene homopolymer or copolymer and that the HMW fraction is an ethylene copolymer. As a matter of definition, the expression "ethylene homopolymer" used herein relates to an ethylene polymer that consists substantially, i. e. to at least 97% by weight, preferably at least 99% by weight, more preferably at least 99.5% by weight, and most preferably at least 99.8% by weight of ethylene and thus is an HD ethylene polymer which preferably only includes ethylene monomer units.

A characterizing feature of the present invention is the density of the multimodal polyethylene. For reasons of strength the density lies in the low to medium density range, more particularly in the range 910-940 kg/m$^3$, preferably 910-932 kg/m$^3$, more preferably 910-925 kg/m$^3$, as measured according to ISO 1183.

The modulus of elasticity is determined according to ISO 527. A pressure pipe made of the multimodal polymer composition according to the present invention preferably has a modulus of elasticity of at most 800 MPa, more preferably at most 500 MPa, and most preferably at most 400 MPa.

Another important feature of the composition according to the invention is abrasion resistance. In order to withstand the often severe application conditions for pressure pipes of the invention, abrasion resistance of the composition should be of <20, as measured according to ASTM D 4060.

Moreover, the melt flow rate (MFR) is an important property of the multimodal polyethylene for pipes according to the invention. The MFR is determined according to ISO 1133 and is indicated in g/10 min, and an indication of the flowability, and hence the processability, of the polymer. The processability of a pipe (or rather the polymer thereof) is defined by throughput (kg/h) per screw revolutions per minute (rpm) of an extruder.

The higher the melt flow rate, the lower the viscosity of the polymer. The MFR is determined at different loadings such as 2.16 kg ($MFR_2$; ISO 1133) or 5.0 kg ($MFR_5$; ISO 1133) or 21.6 kg ($MFR_{21}$; ISO 1133). In the present invention the multimodal polyethylene should have an $MFR_2$ of <2 g/10 min, preferably $MFR_2$ <1 g/10 min, more preferably $MFR_5$ <2 g/10 min. Flow rate ratio, FRR, is the ratio between $MFR_{weight1}$ and $MFR_{weight2}$, i. e. $FRR_{21/5}$ means the ratio between $MFR_{21}$ and $MFR_5$.

In addition to MFR, viscosity and shear sensitivity from dynamic rheological measurements give insight to processability. Dynamic LVE rheological data were collected on Rheometrics RDA II. Measurements were made on melt pressed plaques at 190°C under nitrogen atmosphere in parallel plate (25 mm) configuration with a gap of 2 mm. Data was collected on a frequency scale of 0.01 to 300 rad/s. Prior performing the frequency sweep strain sweeps were performed to establish the linear region.

From the measurement is obtained the storage modulus (G') and loss modulus (G'') as a function of applied frequency (ω). This allows the complex viscosity (η*) together with complex modulus (G*) to be calculated from the dynamic data using Equations 1 and 2:

$$G* = (G'^2 + G''^2)^{1/2} \quad (1)$$

$$\eta* = (G'^2 + G''^2)^{1/2} / \omega \quad (2)$$

The value of complex viscosity at low G*, (corresponding to low frequency value) was used as a measure of molecular weight of the polymer. For comparison of the different measurements, a reference point was chosen from the viscosity curve at a relatively low complex modulus, η* at G* of 2.7kPa.

Whereas the low shear rate viscosity is strongly influenced by the molecular weight of the polymer, the shear sensitivity and melt elasticity reflect the (rheological) broadness of MWD.

SHI is an index to describe the shear sensitivity and rheological broadness. SHI is defined as the ratio of complex viscosities η* taken at two values of complex modulus G*. SHI 2.7/210 stands for ratio of the complex viscosity η* at G*=2.7kPa, and complex viscosity η* at G*=210kPa.

$$SHI\,2.7/210 = \frac{\eta*(G* = 2700Pa)}{\eta*(G* = 210000Pa)}$$

Charpy impact test at low temperatures assess impact toughness and therefore provides a way to evaluate resistance to rapid crack propagation (RCP). In a preferred embodiment of the present invention the composition has a Charpy impact strength at 23°C of at least 67 kJ/m$^2$ and Charpy impact strength at 0°C of at least 78 kJ/m$^2$, measured according to ISO 179.

The slow crack propagation resistance of pipes is determined according to ISO 13479:1997 (Pipe Notch Test, PNT). In another preferred embodiment of the invention notched pipes made of the polyethylene composition has a slow crack growth value at notch 5.0 bar of >500 h and at notch 4.0 bar of >2000 h, measured according to ISO 13479:1997 (Pipe Notch Test, PNT). The slow crack growth properties were also evaluated with constant tensile load method for ESCR, ISO 6252 with notch (CTL).

Pressure performance is evaluated in terms of the number of hours the pipe withstands a certain pressure at a certain temperature. The pressure tests were conducted in line with ISO 1167 with PE63, PE50, and PE40 level control points. A pressure pipe made of the multimodal polymer composition according to the present invention preferably has a pressure resistance of at least 5 000 h at 2.0 MPa/80°C., and more preferably at least 1 000 h at 2.5 MPa/80°C.

The better mechanical abrasion, slow crack growth (SCG) and rapid crack propagation (RCP) properties a polymer composition used for pipes have, the thinner the walls can be and still fulfil the requirements for pressure pipes. Thin walls also means saving of polymer material and the pipes can be made more flexible. Thin walls also means easier processing of pipes, which results in reduced costs. The drip irrigation pipes of low density multimodal polyethylene are more flexible than drip irrigation pipes of high density multimodal polyethylene and are therefore more easily coiled into a roll.

It should be noted that the multimodal polymer composition of the present invention is characterized, not by any single one of the above defined features, but by the combination of all the features defined in claim 1. By this unique combination of features it is possible to obtain a polyethylene composition for irrigation pipes of superior performance, particularly with regard to processability, life time, pressure rating, abrasion resistance, impact strength, slow crack propagation resistance, and rapid crack propagation.

A drip irrigation pipe made of the multimodal polymer composition of the present invention is prepared in a conventional manner, preferably by extrusion in an extruder. This is a technique well known to the skilled person and no further particulars should therefore be necessary here concerning this aspect. Pipes can also be prepared by film extrusion and subsequent forming of pipes by welding of the film/stripes.

It is previously known to produce multimodal, in particular bimodal, olefin polymers, such as multimodal polyethylene, in two or more reactors or zones connected in series and/or with reflux. As instance of this prior art, mention may be made of EP 517 868, regarding the production of multimodal polymers.

According to the present invention, the main polymerisation stages are preferably carried out as a combination of slurry polymerisation/gas-phase polymerisation. The slurry polymerisation is preferably performed in a so-called loop reactor. In order to produce the inventive composition of improved properties, a flexible method is required. For this reason, it is preferred that the composition is produced in two main polymerisation stages in a combination of loop reactor/gas-phase reactor. Optionally and advantageously, the main polymerisation stages may be preceded by a prepolymerisation, in which case 1-5% by weight, of the total amount of polymers is produced. The prepolymer is preferably an ethylene homopolymer (HDPE) or copolymer. At the prepolymerisation all of the catalyst is preferably charged into a loop reactor (first reactor) and the prepolymerisation is performed as a slurry polymerisation. Such a prepolymerisation leads to less fine particles being produced in the following reactors and to a more homogeneous product being obtained in the end. Generally, this technique results in a multimodal polymer mixture through polymerisation with the aid of a Ziegler-Natta or metallocene (single site, SS) catalyst in several successive polymerisation reactors. In the production of a bimodal polyethylene, which according to the invention is the preferred polymer, an ethylene polymer is produced in a loop reactor (second reactor) under certain conditions with respect to hydrogen-gas concentration, temperature, pressure, and so forth. After the polymerisation in the second reactor, the polymer including the catalyst is transferred to a third reactor, a gas phase reactor, where further polymerisation takes place under other conditions. Usually, a homopolymer or a copolymer of high melt flow rate (low molecular weight, LMW) is produced in the second reactor, whereas a second polymer of low melt flow rate (high molecular weight, HMW) and with addition of comonomer is produced in the third reactor.

As comonomer of the HMW fraction various alpha-olefins with 4-20 carbon atoms may be used, but the comonomer is preferably a $C_4$-$C_{20}$ alkene selected from the group consisting of 1-butene, 1-pentene, 4-methyl-1-pentene, 1-hexene, 1-heptene, 1-octene, 1-decene and 1-eicosene. The amount of comonomer is preferably such that it comprises 1.0-4.0 mol%, more preferably 2.0-4.0 mol% of the multimodal polyethylene.

The resulting end product consists of an intimate mixture of the polymers from the three reactors, the different molecular-weight-distribution curves of these polymers together forming a molecular weight distribution curve having a broad maximum or two or more maxima, i. e. the end product is a multimodal polymer mixture. Since multimodal, and especially bimodal, ethylene polymers, and the production thereof belong to the prior art, no detailed description is called for here, but reference is had to the above mentioned EP 517 868. Other process configurations such as loop-loop or gas phase-gas phase would also be capable to produce LLDPE grades suitable for pressure pipes. The order of production of the different molecular fractions can be in reversed order if the polymer is properly separated from comonomer, hydrogen and ethylene.

As stated above, it is preferred that the multimodal polyethylene composition according to the invention is a bimodal polymer mixture. It is also preferred that this bimodal polymer mixture has been produced by polymerisation as above under different polymerisation conditions in two or more polymerisation reactors connected in series. Owing to the flexibility with respect to reaction conditions thus obtained, it is most preferred that the polymerisation is carried out in a prepolymerisation reaetor/a loop reactor/a gas-phase reactor. Preferably, the polymerisation conditions in the preferred two-stage method are so chosen that a comparatively low-molecular polymer is produced in one stage, preferably the second stage, whereas a high-molecular polymer having a content of comonomer is produced in another stage, preferably the third stage. The order of these stages may, however, be reversed.

In a preferred embodiment of the polymerisation in a loop reactor followed by a gas-phase reactor, the polymerisation temperature in the loop reactor preferably is 92-98°C, more preferably about 95°C, and the temperature in the gas-phase reactor preferably is 75-90°C, more preferably 80-87°C. A chain-transfer agent, preferably hydrogen, may also be added as required to the reactors.

The polymer and a master batch was melted in a twin screw extruder, homogenised, discharged and pelletised. The polymer may also be compounded with required additives. Master batch can be added later during extrusion of pipes.

As indicated earlier, the catalyst for polymerising the multimodal polyethylene of the invention may be a Ziegler-Natta type catalyst. Other preferred catalyst are those described in EP 0 678 103, WO 95/12622, WO 97/28170, WO 98/56 831 and/or WO 00/34341.

A "transition metal compound" can be any transition compound which exhibit the catalytic activity alone or together with a cocatalyst/activator. The transition metal compounds are well known in the art and cover e. g. compounds of metals from group 3 to 10, e. g. 3 to 7, such as group 4 to 6, (IUPAC, Nomenclature of Inorganic Chemistry 1989), as well as lanthanides or actinides.

Organotransition metal compounds may have the following formula I:

$$(L)_m R_n M X_q \qquad (I)$$

wherein M is a transition metal as defined above and each X is independently a monovalent anionic ligand, such as a $\sigma$-ligand, each L is independently an organic ligand which coordinates to M, R is a bridging group linking two ligands L, m is 1, 2 or 3, n is 0 or 1, q is 1,2 or 3, and m+q is equal to the valency of the metal.

By "$\sigma$-ligand" is meant a group bonded to the metal at one or more places via a sigma bond.

According to one embodiment said organotransition metal compound I is a group of compounds known as metallocenes. Said metallocenes bear at least one organic ligand, generally 1, 2 or 3, e. g. 1 or 2, which is $\eta$-bonded to the metal, e. g. a $\eta^{2-6}$-ligand, such as a $\eta^5$-ligand. Preferably, a metallocene is a group 4 to 6 transition metal, suitably titanocene, zirconocene or hafnocene, which contains at least one $\eta^5$-ligand, which is e. g. an optionally substituted cyclopentadienyl, an optionally substituted indenyl, an optionally substituted tetrahydroindenyl or an optionally substituted fluorenyl.

The metallocene compound may have a formula II:

$$(Cp)_m R_n M X_q \qquad (II)$$

each Cp independently is an unsubstituted or substituted and/or fused homo- or heterocyclopentadienyl ligand, e. g. substituted or unsubstituted cyclopentadienyl, substituted or unsubstituted indenyl or substituted or unsubstituted fluorenyl ligand; the optional one or more substituent(s) being selected preferably from halogen, hydrocarbyl (e. g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$, -OSiR"$_3$, -SR", -PR"$_2$ or -NR"$_2$, each R" is independently a hydrogen or hydrocarbyl, e. g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl; or e. g. in case of -NR"$_2$, the two substituents R" can form a ring, e. g. five- or six-membered ring, together with the nitrogen atom wherein they are attached to;

R is a bridge of 1-7 atoms, e. g. a bridge of 1-4 C-atoms and 0-4 heteroatoms, wherein the heteroatom(s) can be e. g. Si, Ge and/or O atom(s), whereby each of the bridge atoms may bear independently substituents, such as $C_1$-$C_{20}$-alkyl, tri($C_1$-$C_{20}$alkyl)silyl, tri($C_1$-$C_{20}$alkyl)siloxy or $C_6$-$C_{20}$-aryl substituents); or a bridge of 1-3, e. g. one or two, hetero atoms, such as silicon, germanium and/or oxygen atom(s), e. g. -SiR$^1_2$-, wherein each R$^1$ is independently $C_1$-$C_{20}$-alkyl, $C_6$-$C_{20}$-aryl or tri($C_1$-$C_{20}$-alkyl)silyl-residue, such as trimethylsilyl-;

M is a transition metal of group 4 to 6, such as group 4, e. g. Ti, Zr or Hf;

each X is independently a sigma-ligand, such as H, halogen, $C_1$-$C_{20}$-alkyl, $C_1$-$C_{20}$-alkoxy, $C_2$-$C_{20}$-alkenyl, $C_2$-$C_{20}$-alkynyl, $C_3$-$C_{12}$-cycloalkyl, $C_6$-$C_{20}$-aryl, $C_6$-$C_{20}$-aryloxy, $C_7$-$C_{20}$-arylalkyl, $C_7$-$C_{20}$-arylalkenyl, -SR", -PR"$_3$, -SiR"$_3$, - OSiR"$_3$ or -NR"$_2$; each R" is independently hydrogen or hydrocarbyl, e. g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl; or e. g. in case of -NR"$_2$, the two substituents R" can form a ring, e. g. five- or six-membered ring, together with the nitrogen atom wherein they are attached to;

and each of the above mentioned ring moiety alone or as a part of a moiety as the substituent for Cp, X, R" or R$^1$ can further be substituted e. g. with $C_1$-$C_{20}$-alkyl which may contain Si and/or O atoms;

n is 0 or 1,

m is 1, 2 or 3, e. g. 1 or 2,

q is 1, 2 or 3, e. g. 2 or 3,

the m+q is equal to the valency of M.

Said metallocenes II and their preparation are well known in the art.

Alternatively, in a further subgroup of the metallocene compounds, the metal bears a Cp group as defined above and additionally a $\eta^1$ or $\eta^2$ ligand, wherein said ligands may or may not be bridged to each other. This subgroup includes so called "scorpionate compounds" (with constrained geometry) in which the metal is complexed by a $\eta^5$ ligand bridged to a $\eta^1$ or $\eta^2$ ligand, preferably $\eta^1$ (for example a $\sigma$-bonded) ligand, e. g. a metal complex of a Cp group as defined above, e. g. a cyclopentadienyl group, which bears, via a bridge member, an acyclic or cyclic group containing at least one heteroatom, e. g. - NR"$_2$ as defined above. Such compounds are described e. g. in WO 96/13529, the contents of which are incorporated herein by reference.

Another subgroup of the organotransition metal compounds of formula I with single active site character and thus usable in the present invention is known as non-metallocenes wherein the transition metal (preferably a group 4 to 6 transition metal, suitably Ti, Zr or Hf) has a co-ordination ligand other than $\eta^5$-ligand (i. e. other than cyclopentadienyl ligand). As examples of such compounds, i. a. transition metal complexes with nitrogen-based, cyclic or acyclic aliphatic or aromatic ligands, e. g. such as those described in the applicant's earlier application WO 99/10353 or in the Review of V.C. Gibson at al., in Angew. Chem. Int. Ed., engl., vol 38, 1999, pp 428-447 or with oxygen-based ligands, such as group 4 metal complexes bearing bidentate cyclic or acyclic aliphatic or aromatic alkoxide ligands, e. g. optionally substituted, bridged bisphenolic ligands (see i.a. the above review of Gibson et al.). Further specific examples of non-$\eta^5$ ligands are amides, amide-diphosphane, amidinato, aminopyridinate, benzamidinate, triazacyclononae, allyl, hydrocarbyl, beta-diketimate and alkoxide.

A further suitable subgroup of transition metal compounds include the well known Ziegler-Natta catalysts comprising a transition metal compound of Group 4 to 6 of the Periodic Table (IUPAC) and a compound of Group 1 to 3 of the Periodic Table (IUPAC), and additionally other additives, such as a donor. The catalyst prepared by the invention may preferably form a Ziegler-Natta catalyst component comprising a titanium compound, a magnesium compound and optionally an internal donor compound. Said Ziegler-Natta component can be used as such or, preferably, together with a cocatalyst and/or an external donor. Alternatively, a cocatalyst and/or an external donor may be incorporated to said Ziegler-Natta component when preparing the catalyst according to the method of the invention. The compounds, compositions and the preparation methods are well documented in the prior art literature, i.a. textbooks and patent literature, for the compounds and systems e. g. EP-A-688 794 and the Finnish patent documents nos. 86866, 96615, 88047 and 88048 can be mentioned, the contents of each above document are incorporated herein by reference.

The preparation of metallocenes and non-metallocenes, and the organic ligands thereof, usable in the invention is well documented in the prior art, and reference is made e. g to the above cited documents. Some of said compounds are also commercially available. Thus, said transition metal compounds can be prepared according to or analogous to the methods described in the literature, e. g. by first preparing the organic ligand moiety and the metallating said organic ligand ($\eta$-ligand) with a transition metal. Alternatively, a metal ion of an existing metallocene can be exchanged for another metal ion through transmetallation.

The present invention will now be illustrated by way of non-limiting examples of preferred embodiments in order to further facilitate the understanding of the invention.

### Examples

Multimodal linear low density polyethylene compositions for the preparation of a pressure pipe was produced in three consecutive reactors with either Ziegler-Natta (ZN) or metallocene (SS) type catalyst. The first reactor was used to produce minor amount of polymer (1-5% by weight). In the second and third reactor low molecular weight and high molecular weight polyethylene was produced. Optionally comonomer may or may not be present in all three reactors. The first reactor can be used or not used depending on the polymerisation conditions. In example 5 and 6 a 5.75% Carbon Black Masterbatch, (CBMB) was added and a stabilizer including 0.15% by weight of Castearat® and 0.22% by weight of Irganox® B225. The production conditions for production of the polymers and the characteristics thereof are found below in table 1. In table 2 the pressure test results are presented.

Table 1

| | | Comp. Ex. | Example 1 | Example 2 | Example 3 | Example 4 | Example 5 |
|---|---|---|---|---|---|---|---|
| | Unit | Unimodal ZN | Bimodal ZN Natural | Bimodal ZN Natural | Bimodal ZN Carbon Black +stabilizer | Bimodal ZN Carbon Black +stabilizer | Bimodal SS Natural |
| MFR2 Loop | g/10 min | | 300 | 400 | | | 147 |
| Density Loop | kg/m³ | | 951 | 970 | | | 938 |
| Final Density GPR | kg/m³ | 920 | 923 | 931 | | | 923 |
| Split | wt%/wt%/wt% | Unimodal | 1/40/59 | 1/40/59 | | | 49/51 |

(continued)

| | Unit | Comp. Ex. Unimodal ZN | Example 1 Bimodal ZN Natural | Example 2 Bimodal ZN Natural | Example 3 Bimodal ZN Carbon Black +stabilizer | Example 4 Bimodal ZN Carbon Black +stabilizer | Example 5 Bimodal SS Natural |
|---|---|---|---|---|---|---|---|
| MFR2 Compound | g/10 min | 0.75 | 0.2 | 0.18 | 0.22 | 0.2 | 0.55 |
| MFR5 Compound | g/10 min | 3.32 | 0.87 | 0.78 | 0.93 | 0.84 | 1.66 |
| MFR21 Compound | g/10 min | 61 | 21 | 19 | 23 | 21 | 23 |
| FRR Compound | g/10 min | 18 | 26 | 26 | 25 | 26 | 14 |
| eta 2.7 | kPa | 177.83 | 61.14 | 55.44 | 80.15 | 53.5 | |
| SHI2.7/210 | | | 47.89 | 50.74 | 22.38 | 33.97 | |
| G' (G" 5.0 kPa) | MPa | 3196 | 2364 | 2262 | 1980 | 2387 | |
| Charpy 23°C | kJ/m$^2$ | 65.6 | 69.3 | 85.4 | | | |
| Charpy 0°C | kJ/m$^2$ | 75.1 | 91.3 | 94.7 | 79.7 | 94.7 | 96.4 |
| CTL 5.5 MPa | h | 79 | 501 | 223 | | | |
| CTL 5.0 MPa | h | | | | 1178 | 519 | 250 |
| E-modulus | MPa | 342 | 441 | 582 | 420 | 586 | 365 |
| Flex Modulus 3 P Bend (ISO 178) | MPa | 287 | 320 | 471 | | | 324 |
| Abrasion | mg/1000 rev | 22.5 | 13 | 13 | | | 8.6 |

Table 2

| Pressure | Unit | Comp. Ex. Unimodal ZN | Example 1 Bimodal ZN Natural | Example 2 Bimodal ZN Natural | Example 3 Bimodal ZN + Carbon Black +stabilizer | Example 4 Bimodal ZN + Carbon Black +stabilizer | Example 5 Bimodal SS Natural |
|---|---|---|---|---|---|---|---|
| 20°C, 8 MPa | h | 221 D | 18 D | 660 D | 34.7 D | >5038 | >12480 |
| 20°C, 7 MPa | h | | 416 D | >15346 | 4677 D | >12480 | >12480 |
| 20°C, 6.5 MPa | h | >14340 | >13715 | >15346 | | | |

(continued)

| Pressure | Unit | Comp. Ex. Unimodal ZN | Example 1 Bimodal ZN Natural | Example 2 Bimodal ZN Natural | Example 3 Bimodal ZN + Carbon Black +stabilizer | Example 4 Bimodal ZN + Carbon Black +stabilizer | Example 5 Bimodal SS Natural |
|---|---|---|---|---|---|---|---|
| 80°C, 3.5 MPa | h | | | | 0 D | 181 D | 1210 D |
| 80°C, 3.2 MPa | h | 0.2 D | 0.1 D | 15335 D | 23.7 D | >14640 | >12500 |
| 80°C, 2.5 MPa | h | 4148 D | >17754 | >17219 | 4677 D | >12450 | >12480 |
| 80°C, 2.0 MPa | h | >17448 | >16163 | 7157 | | | |
| 80°C, 1.5 MPa | h | >17556 | >16163 | >17756 | | | |
| PNT 5.0 bar, 80°C | h | 119 | 1061 | >10950 | | | |
| PNT 4.0 bar, 80°C | h | >1043 | >10160 | >9960 | | | |
| D=ductile, >=test stopped without failure | | | | | | | |

By the invention a polyethylene composition especially well suited for drip irrigation purposes may be produced. Compared to unimodal polyethylene compositions the composition of the invention has the benefits of a longer life time, higher pressure resistance, better abrasion resistance, better slow crack growth properties, better Charpy values at 0°C and a higher E-modulus.

**Claims**

1. A multimodal linear low density polyethylene composition for the preparation of a pressure pipe, **characterized in that** said composition is prepared in situ and has a density (ISO 1183) of 910-940 kg/m$^3$, an E-modulus (ISO 527) in the range of <800 MPa, an abrasion resistance (ASTM D 4060) of <20 and an MFR$_2$ (ISO 1133) at 190°C/2 kg of <2 g/10 min.

2. A polyethylene composition according to claim 1, wherein said composition has a density of 910-932 kg/m$^3$.

3. A polyethylene composition according to claim 1, wherein said composition has a density of 910-925 kg/m$^3$.

4. A polyethylene composition according to claim 1, wherein said composition has an MFR$_2$ of <1.0 g/10 min.

5. A polyethylene composition according to claim 1, wherein said composition has an MFR$_5$ of <2 g/10 min.

6. A polyethylene composition according to any of claims 1-5, wherein said composition has an E-modulus of <500 MPa.

7. A polyethylene composition according to any of claims 1-6, wherein said composition has a Charpy impact strength at 23°C of at least 67 kJ/m$^2$ and Charpy impact strength at 0°C of at least 78 kJ/m$^2$, measured according to ISO 179.

8. A polyethylene composition according to any of claims 1-7, wherein said composition has a slow crack growth value in pipe notch test at 80°C, 5.0 bar of >500 h and at 4.0 bar of >2 000 h, measured according to ISO 13479:1997.

9. A polyethylene composition according to any of claims 1-8, wherein the polymerisation catalyst is a Ziegler-Natta type catalyst.

**10.** A polyethylene composition according to any of claims 1-8, wherein the polymerisation catalyst is a Single Site type catalyst.

**11.** A polyethylene composition according to any of claims 1-10, wherein the composition is obtained by polymerisation in a reactor of a low molecular weight ethylene homo- or copolymer fraction, followed by a second polymerisation reactor of a high molecular weight ethylene copolymer.

**12.** A polyethylene composition according to claim 11, wherein the ethylene copolymer of the high molecular weight fraction is a copolymer of ethylene and a $C_4$-$C_{20}$ alkene comonomer selected from the group consisting of 1-butene, 1-pentene, 4-methyl-1-pentene, 1-hexene, 1-heptene, 1-octene, 1-decene and 1-eicosene.

**13.** A polyethylene composition according to any one of claims 1-12, wherein the composition is obtained by slurry polymerisation in a loop reactor of a low molecular weight ethylene fraction, and gas-phase polymerisation of a high molecular weight ethylene/copolymer fraction.

**14.** A pressure pipe produced from multimodal linear low density polyethylene composition according to any of claims 1-13.

**15.** A process for the manufacturing of a pressure pipe made of a composition according to any of claims 1-13, wherein a film is blown from said composition and subsequently welded to form a pipe.

**16.** Use of a pressure pipe according to claim 14 as an irrigation pipe.

**17.** Use of a pressure pipe according to claim 14 as a drip irrigation pipe.

**Patentansprüche**

**1.** Zusammensetzung aus multimodalem linearem Polyethylen niedriger Dichte für die Herstellung eines Druckrohrs, **dadurch gekennzeichnet, daß** die Zusammensetzung in situ hergestellt ist und eine Dichte (ISO 1183) von 910 bis 940 kg/m$^3$, einen E-Modul (ISO 527) im Bereich von < 800 MPa, eine Abriebfestigkeit (ASTM D 4060) von < 20 und einen $MFR_2$-Wert (ISO 1133) bei 190°C/2 kg von < 2 g/10 min aufweist

**2.** Polyethylenzusammensetzung nach Anspruch 1, wobei die Zusammensetzung eine Dichte von 910 bis 932 kg/m$^3$ hat.

**3.** Polyethylenzusammensetzung nach Anspruch 1, wobei die Zusammensetzung eine Dichte von 910 bis 925 kg/m$^3$ hat.

**4.** Polyethylenzusammensetzung nach Anspruch 1, wobei die Zusammensetzung einen $MFR_2$-Wert von < 1.0 g/10 min hat

**5.** Polyethylenzusammensetzung nach Anspruch 1, wobei die Zusammensetzung einen $MFR_5$-Wert von < 2 g/10 min hat

**6.** Polyethylenzusammensetzung nach einem der Ansprüche 1 bis 5, wobei die Zusammensetzung einen E-Modul von < 500 MPa hat

**7.** Polyethylenzusammensetzung nach einem der Ansprüche 1 bis 6, wobei die Zusammensetzung eine Charpy-Kerbschlagzähigkeit bei 23°C von mindestens 67 kJ/m$^2$ und eine Charpy-Kerbschlagzahigkeit bei 0°C von mindestes 78 kJ/m$^2$ aufweist, und zwar gemäß ISO 179 gemessen.

**8.** Polyethylenzusammensetzung nach einem der Ansprüche 1 bis 7. wobei die Zusammensetzung einen Wert für das langsame Rißwachstum beim Rohrkerbtest bei 80°C, 5,0 bar von > 500 h und bei 4.0 bar von > 2000 h hat, und zwar gemäß ISO 13479:1997 gemessen.

**9.** Polyethylenzusammensetzung nach einem der Ansprüche 1 bis 8, wobei der Polymerisationskatalysator ein Katalysator vom Ziegler-Natta-Typ ist.

**10.** Polyethylenzusammensetzung nach einem der Ansprüche 1 bis 8. wobei der Polymerisationskatalysator ein Katalysator vom Typ mit einheitlichen aktiven Zentren ist.

**11.** Polyethylenzusammensetzung nach einem der Ansprüche 1 bis 10, wobei die Zusammensetzung durch Polymerisation eines Ethylenhomo- oder -copolymeranteils mit geringem Molekulargewicht in einem Reaktor, gefolgt von einem Ethylencopolymer mit hohem Molekulargewicht in einem zweiten Polymerisationsreaktor erhalten wird

**12.** Polyethylenzusammensetzung nach einem der Ansprüche 1 bis 11. wobei das Ethylencopolymer des Anteils mit hohem Molekulargewicht ein Copolymer von Ethylen und einem Comonomer aus einem $C_4$-$C_{20}$-Alken ist, das aus der Gruppe ausgewählt ist, die aus 1-Buten, 1-Penten, 4-Methyl-1-penten, 1-Hexen, 1-Hepten, 1-Octen, 1-Decen und 1-Eicosen besteht.

**13.** Polyethylenzusammensetzung nach einem der Anspruche 1 bis 12, wobei die Zusammensetzung durch Suspensionspolymerisation eines Ethylenanteils mit geringem Molekulargewicht in einem Reaktor mit geschlossenem Kreis und Gasphasenpolymensation eines Ethylen Copolymers-Anteils mit hohem Molekulargewicht erhalten wird.

**14.** Druckrohr das aus einer Zusammensetzung aus einem multimodalen linearen Polyethylen niedriger Dichte nach einem Ansprüche 1 bis 13 hergestellt ist.

**15.** Verfahren zur Herstellung eines Druckrohrs, das aus einer Zusammensetzung nach einem der Anspruche 1 bis 13 hergestellt ist, wobei aus der Zusammensetzung eine Fohe geblasen und anschließend verschweißt wird. wodurch ein Rohr erzeugt wird.

**16.** Verwendung eines Druckrohrs nach Anspruch 14 als Berieselungsrohr.

**17.** Verwendung eines Druckrohrs nach Anspruch 14 als Rohr für die tropfende Berieselung.

## Revendications

**1.** Composition de polyéthylène faible densité linéaire multimodal pour la préparation d'un tuyau sous pression, **caractérisée en ce que** ladite composition est préparée in situ et présente une densité (ISO 1183) de 910-940 kg/m$^3$, un module E (ISO 527) dans l'intervalle de <800 MPa, une résistance à l'abrasion (ASTM D 4060) de <20 et un MFR$_2$ (ISO 1133) à 190°C/2 kg de <2 g/10 min.

**2.** Composition de polyéthylène selon la revendication 1, dans laquelle ladite composition présente une densité de 910-932 kg/m$^3$.

**3.** Composition de polyéthylène selon la revendication 1, dans laquelle ladite composition présente une densité de 910-925 kg/m$^3$.

**4.** Composition de polyéthylène selon la revendication 1, dans laquelle ladite composition présente un MFR$_2$ de <1,0 g/10 min.

**5.** Composition de polyéthylène selon la revendication 1, dans laquelle ladite composition présente un MFR$_5$ de <2 g/10 min.

**6.** Composition de polyéthylène selon l'une quelconque des revendications 1-5, dans laquelle ladite composition présente un module E de <500 MPa.

**7.** Composition de polyéthylène selon l'une quelconque des revendications 1-6, dans laquelle ladite composition présente une résistance au choc Charpy à 23°C d'au moins 67 kJ/m$^2$ et une résistance au choc Charpy à 0°C d'au moins 78 kJ/m$^2$, mesurées selon ISO 179.

**8.** Composition de polyéthylène selon l'une quelconque des revendications 1-7, dans laquelle ladite composition présente une valeur de lente propagation des fissures dans un test d'entaille de tuyau à 80°C, 5,0 bar de >500 h et à 4,0 bar de >2000 h, mesurée selon ISO 13479:1997.

**9.** Composition de polyéthylène selon l'une quelconque des revendications 1-8, dans laquelle le catalyseur de polymérisation est un catalyseur de type Ziegler-Natta.

**10.** Composition de polyéthylène selon l'une quelconque des revendications 1-8, dans laquelle le catalyseur de polymérisation est un catalyseur de type à site unique.

**11.** Composition de polyéthylène selon l'une quelconque des revendications 1-10, dans laquelle la composition est obtenue par polymérisation dans un réacteur d'une fraction d'homo- ou de copolymère d'éthylène de faible poids moléculaire, suivi par un second réacteur de polymérisation d'un copolymère d'éthylène de poids moléculaire élevé.

**12.** Composition de polyéthylène selon la revendication 11, dans laquelle le copolymère d'éthylène de la fraction de poids moléculaire élevé est un copolymère d'éthylène et d'un comonomère d'alcène en $C_4$-$C_{20}$ choisi parmi le 1-butène, le 1-pentène, le 4-méthyl-1-pentène, le 1-hexène, le 1-heptène, le 1-octène, le 1-décène et le 1-élcosène.

**13.** Composition de polyéthylène selon l'une quelconque des revendications 1-12, dans laquelle la composition est obtenue par une polymérisation en suspension dans un réacteur à boude d'une fraction d'éthylène de faible poids moléculaire et par une polymérisation en phase gazeuse d'une fraction de copolymère/éthylène de poids moléculaire élevé.

**14.** Tuyau sous pression produit à partir d'une composition de polyéthylène faible densité linéaire multimodal selon l'une quelconque des revendications 1-13.

**15.** Procédé pour la fabrication d'un tuyau sous pression constitué d'une composition selon l'une quelconque des revendications 1-13, dans lequel un film est soufflé à partir de ladite composition et est ensuite soudé pour former un tuyau.

**16.** Utilisation d'un tuyau sous pression selon la revendication 14 comme tuyau d'irrigation.

**17.** Utilisation d'un tuyau sous pression selon la revendication 14 comme tuyau d'irrigation par ruissellement.